# FASCICULE DE BREVET EUROPEEN

(11) **EP 0 622 150 B1**
(45) Date de publication et mention de la délivrance du brevet: **13.08.1997**
(21) Numéro de dépôt: 94470013.7
(22) Date de dépôt: 19.04.1994
(51) Int. Cl.: B23K 33/00, B23K 26/00

(54) **Soudage laser des pièces embouties à collerette d'assemblage**
Verfahren zum Laserschweissen von tiefgezogene Werkstücke umlaufenden Blechflansche
Laser welding method of stamped workpieces flanges

(30) Priorité: 27.04.1993 FR 9304967
(43) Date de publication de la demande: 02.11.1994
(73) Titulaire: SOLLAC, F-92800 Puteaux (FR)
(72) Inventeur: Col, Alain, F-57100 Thionville (FR); Guth, Jérome, F-59140 Dunkerque (FR)
(74) Mandataire: Ventavoli, Roger

(56) Documents cités:
- DE-A- 3 407 770
- DE-A- 3 902 163
- FR-A- 2 543 923

## Description

La présente invention concerne la réalisation d'assemblages de pièces embouties, ou simplement pliées, qui présentent une collerette d'assemblage pour être réunies deux à deux par soudage laser après positionnement.

En particulier, l'invention a trait aux pièces en tôle emboutie conformée en deux demi-coquilles présentant chacune une collerette périphérique et qui sont assemblées par soudage de leurs collerettes pour former des récipients étanches. A ce titre l'invention trouve une application préférentielle mais non limitative à la réalisation de réservoirs métalliques de carburant pour véhicules automobiles.

Il est déjà connu, par exemple du document DE 3407770 de réaliser des assemblages de cette manière, mais l'encombrement d'une torche de soudage à faisceau laser interdit en général d'effectuer sur la collerette un cordon de soudure qui soit proche des parois des pièces à assembler. Ceci conduit à l'utilisation de plus de métal qu'il n'est strictement nécessaire, afin de ménager un bord (dit bord tombé) de largeur suffisante à cet effet, ce qui grève inutilement le coût de revient de l'objet réalisé.

En outre, dans le cas de réservoirs pour véhicules, ces récipients sont classiquement réalisés en tôles d'acier en plomb et l'assemblage des deux demi-coquilles est réalisé par soudage par résistance électrique à la molette des deux collerettes.

Il a déjà été envisagé de substituer à la tôle plombée, une tôle aluminée (revêtement de l'acier avec un alliage Al-Si) qui présente une excellente résistance aux agressions chimiques et mécaniques subies par les réservoirs de véhicules automobiles.

Face aux difficultés rencontrées pour souder par résistance électrique ces tôles aluminées, on a tenté de réaliser cet assemblage des deux demi-coquilles par soudure au moyen d'un faisceau laser. Ceci se heurte en fait à plusieurs difficultés.

Pour que la soudure par faisceau laser soit réussie, il faut que le jeu entre les deux demi-coquilles ne soit pas supérieur à une valeur relativement faible, de l'ordre de 0,3 mm.

Par contre, si le jeu entre les deux collerettes est trop faible, l'échappement des gaz produits lors du soudage peut être gêné. Il risque alors de se former des porosités qui sont évidemment nuisibles à l'étanchéité du réservoir.

Les deux demi-coquilles sont fabriquées par emboutissage et, de manière connue, dans les angles, les collerettes présentent un mode de déformation, connu chez les emboutisseurs sous le nom de "rétreint", qui fait intervenir une compression dans le plan de la tôle qui se résorbe général par la formation de plis permanents sur la collerette.

Il en résulte que lors de l'assemblage, ces zones plissées se trouvant dans les coins des collerettes donnent lieu à un contact irrégulier qui est total par endroit mais qui peut présenter un jeu égal à 1 mm en d'autres endroits. Ces irrégularités ne peuvent être résorbées même en appliquant une forte pression. Ceci interdit évidemment le soudage par faisceau laser pour lequel le jeu ne peut excéder 0,3 mm environ.

La présente invention se propose de fournir un procédé de soudage qui permet de réaliser un soudage fiable et économe en utilisant un faisceau laser.

A cet effet, l'invention a pour objet un procédé de soudage par faisceau laser de pièces embouties, ou pliées, conformées en deux demi-coquilles qui, en vue de leur réunion deux à deux par soudage laser après positionnement, présentent des collerettes périphériques d'assemblage, ledit soudage s'effectuant sur lesdites collerettes alors que les demi-coquilles s'étendent de part et d'autre de ces colerettes, caractérisé en ce que, avant l'opération de soudage, on rabat lesdites collerettes selon un même angle mais en des sens opposés sur les deux pièces à réunir, de manière à réaliser un redan assurant un emboîtement conique de ces deux pièces et en ce que le faisceau de soudage par laser est dirigé sur ledit redan selon une orientation inclinée par rapport aux demi-coquilles à réunir.

Comme on l'aura compris, ce redan permet, grâce à son obliquité, de disposer la torche de soudage de manière inclinée par rapport aux pièces à réunir, ce qui autorise un rapprochement du joint de soudure des parois de l'assemblage à réaliser, bien plus que ne l'autorise l'encombrement de la torche dans le cas d'une collerette de soudage plane.

Par ailleurs, l'emboîtement des deux parties coniques des collerettes détermine une pression de contact élevée entre les deux parties à assembler, et cela même sous un effort réduit, ce qui élimine la possibilité de jeu excessif.

Selon une autre caractéristique de l'invention, le rabattement des collerettes est réalisé en même temps que l'opération d'emboutissage du flan permettant d'obtenir les pièces à réunir, ce qui diminue la surface libre sous le serre-flan de l'outil d'emboutissage et atténue très fortement la tendance à la formation de plis.

Avantageusement, chacune de ces pièces constitutives subit, après l'opération d'emboutissage, une opération de détourage destinée à découper les parties résiduelles de la collerette et limiter ainsi l'encombrement de l'objet obtenu, par exemple un réservoir de carburant à embarquer sur véhicule automobile.

Selon encore une autre caractéristique de l'invention, le redan de la collerette de l'une des pièces à réunir subit un traitement de manière à présenter des rainures de faible profondeur, orientées tranversalement.

Avantageusement, la profondeur de ces rainures est comprise entre 0,1 et 0,2 mm.

Ces rainures permettent d'éviter la formation de porosités qui sont dues généralement au fait que des vapeurs d'aluminium ne peuvent s'échapper de la zone de fusion de la soudure. Ces rainures permettent l'échappement de ces vapeurs d'aluminium sans pour autant nuire à la réalisation d'une soudure continue et de qualité.

L'invention a également pour objet l'assemblage lui-même, par exemple un récipient, notamment un récipient étanche comme un réservoir de carburant pour véhicules automobile, cet assemblage étant obtenu par la réunion d'au moins deux pièces embouties, ou pliées, en demi-coquille pourvues de collerettes périphériques de soudage, ces collerettes étant rabattues d'un même angle mais dans des sens opposés sur les demi-coquilles à réunir de manière à former un redan incliné assurant un emboîtement conique desdites pièces.

D'autres caractéristiques et avantages de l'invention ressortiront de la description qui suit d'exemples de réalisation de l'invention, en se référant aux dessins annexés sur lesquels :
- la figure 1 illustre la fabrication classique de réservoirs métalliques formés de deux demi-coquilles à collerette de soudage en utilisant la technique de soudure par résistance à molettes ;
- la figure 2 est une vue d'ensemble du réservoir obtenu par l'opération de soudage illustrée sur la figure 1 ;
- la figure 3 illustre une utilisation traditionnelle d'une torche laser appliquée au soudage d'un réservoir automobile ;
- la figure 4 illustre un mode de réalisation d'un réservoir conforme à l'invention ;
- la figure 5 représente l'utilisation d'une torche laser pour le soudage d'un réservoir automobile conformément à l'invention ;
- la figure 6 est une vue de détail représentant une collerette à rainures conforme à une variante de réalisation de l'invention ; et
- les figures 7 à 9 représentent un outil de matriçage ainsi que les différentes opérations de matriçage successives réalisées par cet outil ;
- la figure 11 illustre schématiquement une autre conformation possible de pièces à assembler auxquelles l'invention peut s'appliquer.

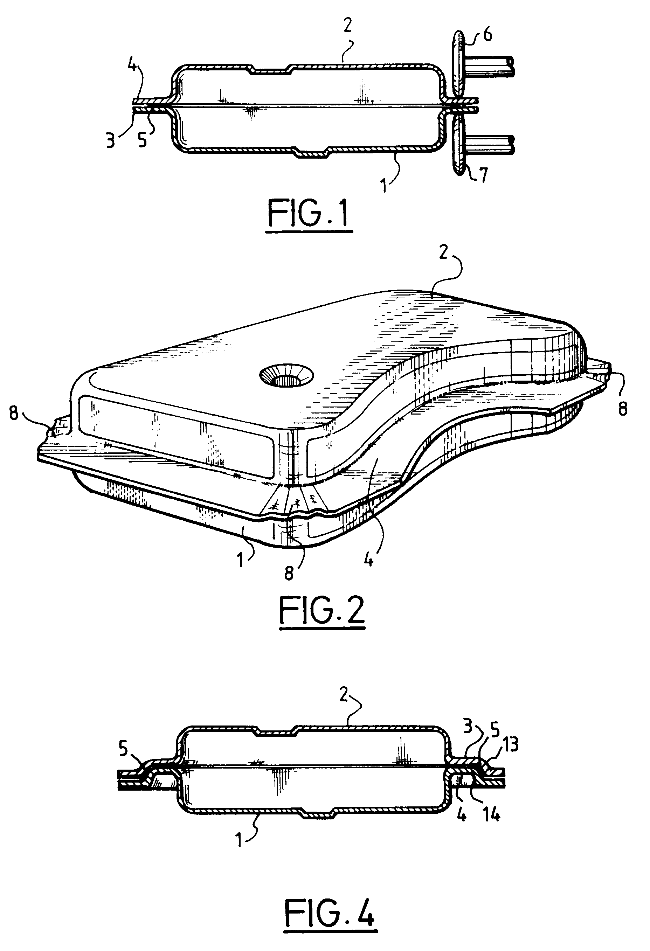

La figure 1 illustre la fabrication d'un réservoir métallique à partir de deux demi-coquilles inférieure 1 et supérieure 2 qui présentent chacune une collerette périphérique 3, respectivement 4. Ces deux demi-coquilles sont assemblées par réalisation d'un joint de soudure 5 entre leurs deux collerettes au moyen d'un dispositif de soudage par résistance électrique utilisant deux molettes de soudage 6 et 7.

La figure 2 représente deux demi-coquilles assemblées l'une sur l'autre. Ces deux demi-coquilles sont obtenues par une opération d'emboutissage et, lors de cette opération, il se crée dans les angles (ou coins) des collerettes des zones ondulées schématisées en 8. Les ondulations ainsi obtenues ne peuvent être réduites, même en exerçant une forte pression, à une valeur inférieure au jeu maximal au delà duquel on ne peut plus assurer un soudage fiable par soudage avec une torche laser. Dans le cas où les deux demi-coquilles sont réalisées en acier revêtu d'un alliage aluminium-silicium, ce jeu maximal est égal à 0,3 mm.

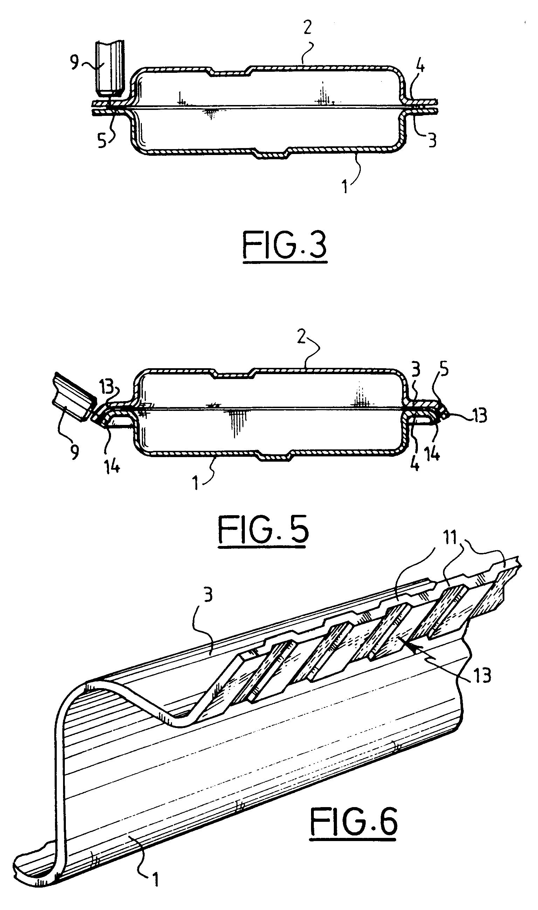

La figure 3 illustre les handicaps d'utilisation d'une torche laser pour réaliser le soudage des deux collerettes 3 et 4. En effet, la torche de soudage par effet laser 9 présente un certain encombrement si bien que le joint de soudure 5 ne peut être réalisé qu'à une certaine distance des parois verticales des demi-coquilles, ce qui, d'une part, augmente l'encombrement du réservoir ainsi réalisé et, d'autre part, entraîne la nécessité d'un surplus de matière.

La figure 4 illustre le procédé selon l'invention. On voit que les collerettes de bord 3 et 4 ont subi une opération de rabattement de manière à présenter une partie inclinée ou redan 13, respectivement 14. De cette manière, les deux demi-coquilles 1 et 2 sont assemblées l'une sur l'autre de manière à réaliser un assemblage conique, ce qui permet d'obtenir une pression de contact élevée entre les deux collerettes 3 et 4, même sans exercer un effort important. Il en résulte que le jeu entre les deux redans 13 et 14 est inférieur au jeu minimal précité de 0,3 mm.

Par ailleurs, comme indiqué plus haut, la présence de ce redan permet de réduire de manière importante la tendance à la formation de plis dans les coins de la collerette.

Comme on le peut voir sur la figure 5, la soudure 5 est réalisée sur les redans des deux collerettes, ce qui permet d'incliner la torche laser 9 d'un angle correspondant sensiblement à l'angle d'inclinaison des redans 13 et 14. De ce fait, le joint de soudure 5 peut être réalisé beaucoup plus près des parois verticales des deux demi-coquilles 1 et 2 de manière à limiter l'encombrement du réservoir et la quantité de matière utilisée.

La figure 6 illustre une variante de l'invention selon laquelle le redan de l'une des demi-coquilles subit, pendant l'opération d'emboutissage, une opération de déformation par matriçage permettant de réaliser des rainures 11 de faible épaisseur dirigées sensiblement perpendiculairement aux bords de la demi-coquille. La profondeur de ces rainures est évidemment inférieure au jeu maximal permis pour le soudage laser, à savoir comprise entre 0,1 et 0,2 mm par exemple.

Ces rainures qui ne sont réalisées que sur l'un des redans permettent d'évacuer les vapeurs d'aluminium pouvant se créer lors de l'opération de soudure, ce qui élimine la possibilité de formation de porosités.

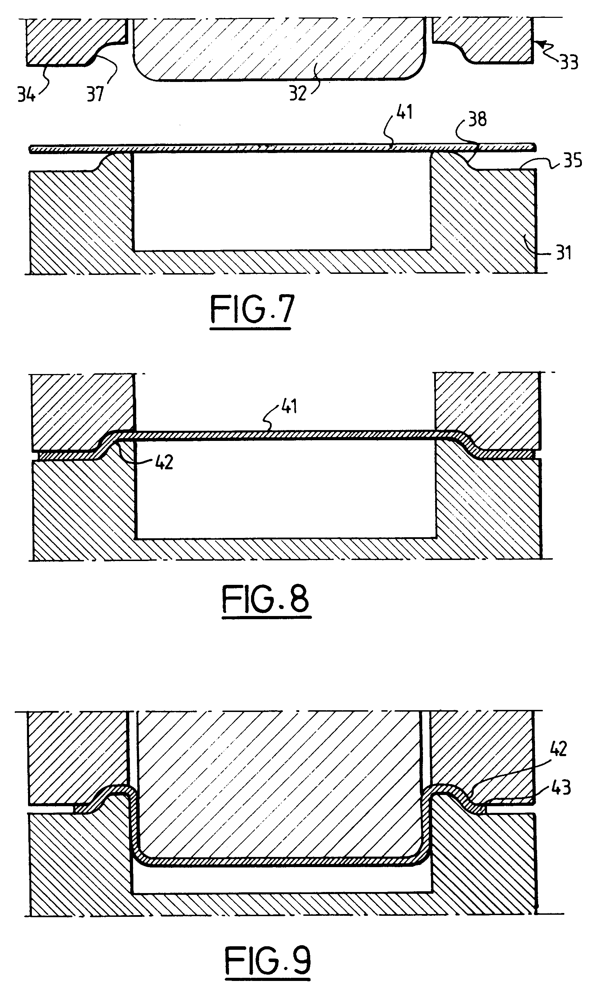

Les figures 7 à 9 représentent un outil d'emboutissage permettant la mise en oeuvre du procédé selon l'invention. Il comporte une matrice 31, un poinçon 32 et un serre-flan 33. La surface active 34 du serre-flan 33 et la surface périphérique en regard 35 de la matrice 31 présentent un profil complémentaire comportant une partie inclinée 37, respectivement 38, destinée à réaliser un redan dans la collerette.

Dans le cas où l'on désire réaliser dans le redan des ondulations telles qu'indiquées sur la figure 6, les parties inclinées 37 et 38 peuvent être ondulées de manière correspondante.

Les figures 7 à 9 montrent les différentes étapes de réalisation d'une demi-coquille. Sur la figure 7, on voit un flan 41 mis en place sur la matrice 31.

Durant une première phase, le serre-flan 33 descend et vient en contact avec la matrice 31 de manière à réaliser un redan 42, comme cela est représenté sur la figure 8.

Ensuite, le poinçon 32 descend pour réaliser l'opération d'emboutissage proprement dite. On voit que la collerette initiale est réduite par l'étirage du flan 41 et ne présente plus qu'une petite partie horizontale 43 à la suite du redan 42. Cette partie horizontale pourra être supprimée ensuite par une opération de détourage avant l'opération de soudage.

Pendant l'opération d'emboutissage, le redan 42 freine un peu le flan 41, mais il ne s'oppose pas à la mise en forme. Au contraire, le fait de diminuer la surface plane du flan 41 se trouvant entre la matrice 31 et le serre-flan 33 est favorable car les plis qui se forment en temps normal au niveau des angles de la collerette se propagent difficilement.

Les plis dans les zones d'angles ou de coins sont très réduits si bien que le jeu entre les deux collerettes, au niveau de la zone de soudage, est toujours inférieur au jeu maximal de 0,3 mm.

L'invention permet d'obtenir une soudure de qualité exempte de porosité, ce qui assure l'étanchéité du récipient obtenu, ce qui est important dans le cas d'un réservoir de véhicule automobile.

L'utilisation d'un outil de matriçage comme décrit ci-dessus permet d'obtenir en une seule opération des demi-coquilles munies de redans pour réaliser le procédé selon l'invention.

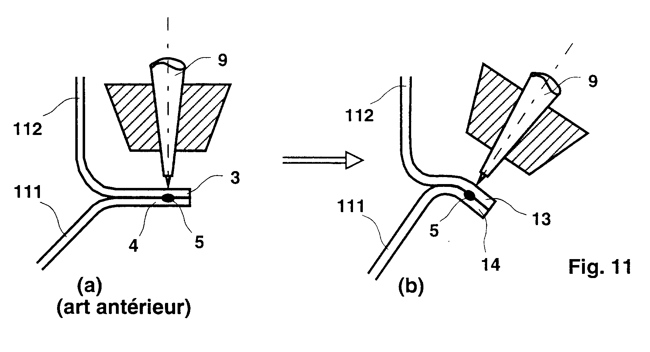

Les figures 11 illustrent un cas dans lequel les tôles embouties 111 et 112 présentent cette fois des inclinaisons différentes entre elles pour réaliser leur assemblage. La formation du redan 13, 14 conformément à l'invention (figure b) permet de rapprocher la soudure laser 5 des parois de la pièce, procurant ainsi une réduction de la largeur des bords tombés.

## Revendications

1. Procédé de soudage par faisceau laser de pièces embouties, ou pliées, conformées en deux demi-coquilles (1, 2) qui, après positionnement en vue de leur réunion deux à deux par soudage, présentent des collerettes périphériques d'assemblage (3, 4), le soudage s'effectuant sur lesdites collerettes alors que les demi-coquilles s'étendent de part et d'autre de ces collerettes, caractérisé en ce que, avant l'opération de soudage, on rabat les collerettes (3, 4) selon un même angle, mais en des sens opposés sur les deux pièces (1, 2) à réunir, de manière à réaliser des redans (13, 14) assurant un emboîtement conique desdites pièces et en ce que le faisceau de soudage (9) par laser est dirigé sur lesdits redans (13, 14) selon une orientation inclinée par rapport aux demi-coquilles à réunir.

2. Procédé selon la revendication 1, caractérisé en ce que l'on soumet l'un (13) desdits redans à un traitement de manière à lui conférer des rainures transversales (11).

3. Procédé selon la revendication 2, caractérisé en ce que la profondeur desdites rainures (11) est comprise entre 0,1 et 0,2 mm.

4. Procédé selon la revendication 1, caractérisé en ce que le rabattement des collerettes (3, 4) est réalisé en même temps que l'opération d'emboutissage permettant d'obtenir les pièces à assembler (1, 2).

5. Procédé selon la revendication 1, caractérisé en ce que l'opération de rabattement est effectuée au moyen d'un serre-flan (33) avant l'opération d'emboutissage.

6. Assemblage obtenu par la réunion d'au moins deux pièces en demi-coquilles pourvues de collerettes périphériques de soudage, caractérisé en ce que lesdites collerettes (3, 4) sont rabattues d'un même angle mais selon des sens opposés sur les deux demi-coquilles à réunir (1, 2), de manière à former des redans inclinés (13, 14) assurant un emboîtement conique desdites pièces.

7. Assemblage selon la revendication 6, caractérisé en ce qu'il constitue un récipient.

8. Assemblage selon la revendication 6, caractérisé en ce que un redan (13) au moins est pourvu des rainures transversales (11) de faible profondeur.

## Claims

1. Method of welding stamped, or folded, workpieces using a laser beam, the said workpieces being formed into two half-shells (1, 2) which, after they are positioned for the purpose of joining them in pairs by welding, have peripheral assembly flanges (3, 4), the welding taking place on the said flanges, while the half-shells extend on either side of these flanges, characterized in that, before the welding operation, the flanges (3, 4) are turned down at the same angle, but in opposite directions, on the two workpieces (1, 2) to be joined together, so as to produce steps (13, 14) ensuring conical interlocking of the said workpieces and in that the laser welding beam (9) is directed onto the said steps (13, 14) with an orientation which is inclined with respect to the half-shells to be joined together.

2. Method according to Claim 1, characterized in that one (13) of the said steps undergoes a treatment so as to give it transverse grooves (11).

3. Method according to Claim 2, characterized in that the depth of the said grooves (11) is between 0.1 and 0.2 mm.

4. Method according to Claim 1, characterized in that the flanges (3, 4) are turned down at the same time as the stamping operation serving to obtain the workpieces (1, 2) to be assembled is carried out.

5. Method according to Claim 1, characterized in that the turning-down operation is carried out by means of a blank holder (33) before the stamping operation.

6. Assembly obtained by joining together at least two half-shell workpieces provided with peripheral welding flanges, characterized in that the said flanges (3, 4) are turned down at the same angle, but in opposite directions, on the two half-shells (1, 2) to be joined together, so as to form inclined steps (13, 14) ensuring conical interlocking the said workpieces.

7. Assembly according to Claim 6, characterized in that it constitutes a container.

8. Assembly according to Claim 6, characterized in that at least one step (13) is provided with the shallow transverse grooves (11).

## Patentansprüche

1. Verfahren zum Laserstrahlschweißen von tiefgezogenen oder gefalzten Werkstücken aus zwei formmäßig übereinstimmenden Halbschalen (1, 2), die nach einer Positionierung im Hinblick auf ihre paarweise Vereinigung durch Verschweißen Zusammenbaurandflansche (3, 4) aufweisen, wobei das Schweißen auf die Flansche ausgeübt wird, wenn die zwei Halbschalen sich beidseits dieser Flansche erstrecken, dadurch gekennzeichnet, daß die Flansche (3, 4) vor dem Schweißvorgang mit demselben Winkel, jedoch in entgegengesetzten Richtungen zu den zwei zu vereinigenden Werkstücken (1, 2) derart umgelegt werden, daß Stufen (13, 14) gebildet werden, die ein konisches Ineinanderpassen der Werkstücke sicherstellen, und daß der Laserschweißstrahl (9) auf die Stufen (13, 14) entlang einer Ausrichtung gerichtet wird, die in bezug auf die zwei zu vereinigenden Halbschalen geneigt ist.

2. Verfahren nach Anspruch 1, dadurch gekennzeichnet, daß eine (13) der Stufen einer Behandlung derart unterworfen wird, daß sie mit quer verlaufenden Nuten (11) versehen wird.

3. Verfahren nach Anspruch 2, dadurch gekennzeichnet, daß die Tiefe der Nuten (11) zwischen 0,1 und 0,2 mm liegt.

4. Verfahren nach Anspruch 1, dadurch gekennzeichnet, daß das Umlegen der Flansche (3, 4) zur selben Zeit ausgeführt wird wie der Tiefziehvorgang, um die zusammenzubauenden Werkstücke (1, 2) erzeugen zu können.

5. Verfahren nach Anspruch 1, dadurch gekennzeichnet, daß der Umlegevorgang mittels eines Niederhalters (33) vor dem Tiefziehvorgang bewirkt wird.

6. Durch Vereinigung von wenigstens zwei Werkstücken in Form von Halbschalen erhaltener Aufbau, die mit Schweißrandflanschen versehen sind, dadurch gekennzeichnet, daß die Flansche (3, 4) mit demselben Winkel, jedoch in entgegengesetzten Richtungen in bezug auf die zwei zu vereinigenden Halbschalen (1, 2) derart umgelegt sind, daß geneigte Stufen (13, 14) gebildet sind, die ein konisches Ineinanderpassen der Werkstücke sicherstellen.

7. Aufbau nach Anspruch 6, dadurch gekennzeichnet, daß er einen Behälter bildet.

8. Aufbau nach Anspruch 6, dadurch gekennzeichnet, daß wenigstens eine Stufe (13) mit quer verlaufenden Nuten (11) geringer Tiefe versehen ist.
